# EUROPÄISCHE PATENTANMELDUNG

(11) **EP 2 141 002 A1**
(43) Veröffentlichungstag der Anmeldung: **06.01.2010**
(21) Anmeldenummer: 09164144.9
(22) Anmeldetag: 30.06.2009
(51) Int. Cl.: B29C 65/70, B29C 65/56, F16L 9/19, B29C 45/14

(54) **Verbundbauteil aus wenigstens zwei Teilkomponenten und einer diese verbindenden Fügekomponente sowie Verfahren zur Herstellung desselben**

(30) Priorität: 02.07.2008 DE 102008031348
(71) Anmelder: Röchling Automotive AG & Co. KG, 68165 Mannheim (DE)
(72) Erfinder: Chini, Fabrizio, 38060, Isera (IT); Frenez, Luca, 39100, Bolzano (IT); Mosca, Devid, 39051, Bronzolo (IT); Barbolini, Marco, 39100, Bolzano (IT); Waid, Helmuth, 39052, Kaltern (IT); De Metri, Ivan, 39100, Bolzano (IT)
(74) Vertreter: Trossin, Hans-Jürgen

(57) **Zusammenfassung**

Die vorliegende Erfindung betrifft ein Verbundbauteil (10) aus wenigstens zwei Teilkomponenten (12, 14), insbesondere umfassend eine Oberschale und eine Unterschale, welche durch eine Fügekomponente (18) aus einem fließfähigen und erstarrbaren Material derart formschlüssig miteinander verbunden sind, dass jede einzelne zu fügende Teilkomponente (12, 14) in einer eine Relativbewegung zwischen ihr und der Fügekomponente (18) hemmenden Formschlussverbindung mit der Fügekomponente (18) steht, wobei die Teilkomponenten (12, 14) zwischen sich eine die Fügestelle der Teilkomponenten (12, 14) enthaltende Fügefläche (22) definieren, wobei das Verbundbauteil (10) einen von der Fügefläche (22) durchsetzten Fügewandabschnitt (24) und eine von der Fügefläche (22) durchsetzte, mit Abstand von dem Fügewandabschnitt (24) vorgesehene und mit diesem verbundene Begrenzungswand (26) aufweist, wobei sowohl der Fügewandabschnitt (24) als auch die Begrenzungswand (26) einen Winkel, vorzugsweise rechten Winkel, mit der Fügefläche (22) einschließen, und wobei zumindest ein Abschnitt der Fügekomponente (18) zwischen dem Fügewandabschnitt (24) und der Begrenzungswand (26) aufgenommen ist.

## Beschreibung

Die vorliegende Erfindung betrifft ein Verbundbauteil aus wenigstens zwei Teilkomponenten, insbesondere umfassend eine Oberschale und eine Unterschale, welche durch eine Fügekomponente aus einem fließfähigen und erstarrbaren Material derart formschlüssig miteinander verbunden sind, dass jede einzelne Teilkomponente in einer eine Relativbewegung zwischen ihr und der Fügekomponente hemmenden Formschlussverbindung mit der Fügekomponente steht.

Weiterhin betrifft die vorliegende Erfindung ein Verfahren zur Herstellung eines Verbundbauteils umfassend folgende Verfahrensschritte: Einlegen der Teilkomponenten in ein Formwerkzeug, Anordnen der Teilkomponenten in einen vorzugsweise endgestaltnahen Fügebereitschaftszustand, Bilden einer Fügekavität, welche durch das Formwerkzeug einerseits und Abschnitte der Teilkomponenten andererseits definiert ist, Füllen der Fügekavität mit fließfähigem und erstarrbarem Material.

Ein gattungsgemäßes Verbundbauteil und ein gattungsgemäßes Verfahren zur Herstellung eines Verbundbauteils sind zum Beispiel aus der DE 100 22 360 A1 bekannt.

Bei dem aus dem Stand der Technik bekannten Verbundbauteil und dem Verfahren zu seiner Herstellung werden die zu fügenden Teilkomponenten in einem Fügebereich durch Verstärkungselemente umgeben, die bereichsweise einen Formschluss mit den Teilkomponenten bilden. Die Teilkomponenten werden dann durch im Fügebereich angespritzten oder aufgeschrumpften thermoplastischen Kunststoff miteinander verbunden.

Dabei ist unter dem Begriff "Fügebereich" ein die Fügeverbindung der Teilkomponenten untereinander und die Fügeverbindung der Teilkomponenten mit der Fügekomponente enthaltender Bereich des Verbundbauteils zu verstehen.

Nachteilig an der aus dem Stand der Technik bekannten Lehre ist die mangelnde Dichtigkeit der Fügeverbindung der Teilkomponenten untereinander, was insbesondere bei fluidleitenden Verbundbauteilen der eingangs genannten Art zu erheblichen Funktionsbeeinträchtigungen führen kann.

Insbesondere auf dem Gebiet der Herstellung von Saugrohren aus Kunststoff kommt es darauf an, dass die Verbindung zwischen den Teilkomponenten sowohl mechanisch fest als auch zuverlässig dicht ist.

Ein weiterer Nachteil der aus dem Stand der Technik bekannten Lehre liegt in dem verhältnismäßig aufwändigen Formwerkzeug zur Urformung der Fügekomponente.

Schließlich sind nach der aus dem Stand der Technik bekannten Lehre nur Verbundbauteile aus zwei durch eine Fügekomponente miteinander gefügten Teilkomponenten herstellbar.

Es ist daher Aufgabe der vorliegenden Erfindung, die Nachteile der aus dem Stand der Technik bekannten gattungsgemäßen Verbundbauteile und ihres Herstellungsverfahrens zu überwinden.

Gemäß einem ersten Gesichtspunkt der vorliegenden Erfindung wird diese Aufgabe gelöst, indem die Teilkomponenten zwischen sich eine die Fügestelle der Teilkomponenten enthaltende Fügefläche definieren, wobei das Verbundbauteil einen von der Fügefläche durchsetzten Fügewandabschnitt und eine von der Fügefläche durchsetzte, mit Abstand von dem Fügewandabschnitt vorgesehene und mit diesem verbundene Begrenzungswand aufweist, wobei sowohl der Fügewandabschnitt als auch die Begrenzungswand einen Winkel, vorzugsweise rechten Winkel, mit der Fügefläche einschließen und wobei zumindest ein Abschnitt der Fügekomponente zwischen dem Fügewandabschnitt und der Begrenzungswand aufgenommen ist. Dabei ist eine Fügestelle der Teilkomponenten jene Stelle, an welcher Teilkomponenten unmittelbar miteinander verbunden sind. An der Fügestelle kann es bei Anwendung entsprechender Fügeverfahren zu einer stoffschlüssigen Verbindung der Teilkomponenten untereinander gekommen sein.

In der gerade beschriebenen Anordnung lässt sich die Menge der Fügestellen zu einer Fügefläche ergänzen, welche Fügewandabschnitt und Begrenzungswand durchsetzt. Dabei ist die Fügefläche keine streng mathematische Fläche, in dem Sinn, dass sie eine endliche Dicke aufweisen kann.

Der Winkel zwischen Fügewandabschnitt bzw. Begrenzungswand und Fügefläche in einem Punkt, in dem sich die Oberflächen von Fügewandabschnitt bzw. Begrenzungswand und Fügefläche berühren, ist insbesondere im Falle gekrümmter Flächen der Winkel zwischen den Schmiegeebenen an die jeweiligen Oberflächen im Berührpunkt.

In der beschriebenen Geometrie bilden die Teilkomponenten im Fügebereitschaftszustand zusammen mit dem Formwerkzeug einen Hohlraum, bei welchem zwei gegenüberliegende Seitenwände durch den Fügewandabschnitt auf der einen Seite und durch die Begrenzungswand auf der anderen Seite gebildet werden. In diesem Hohlraum kann zur Herstellung einer Verbindung zwischen der Fügekomponente und den Teilkomponenten sowie der Teilkomponenten untereinander zumindest ein Abschnitt der Fügekomponente aufgenommen sein.

Ein wesentlicher Vorteil der gerade beschriebenen Gestaltung im Bereich der Fügestelle gegenüber dem Stand der Technik liegt darin, dass lediglich die noch fehlenden Wände durch das Formwerkzeug bereitgestellt werden müssen, was die Verwendung eines wesentlich einfacheren Formwerkzeugs erlaubt.

Gemäß einer besonders vorteilhaften Weiterbildung der vorliegenden Erfindung füllt die Fügekomponente den Bereich zwischen Fügewandabschnitt und Begrenzungswand vollständig aus, was zu einer besseren Verbindungsfestigkeit und insbesondere einer besseren Dichtigkeit der Verbindung führt.

Um die Festigkeit der Verbindung weiterhin zu erhöhen weist die Verbindung der Begrenzungswand mit dem Fügewandabschnitt gemäß einer vorteilhaften Weiterbildung der vorliegenden Erfindung wenigstens einen Verbindungssteg auf, welcher zumindest längs eines Abschnitts von der Fügekomponente hintergriffen, vorzugsweise vollständig umschlossen ist.

Sind mehrere derartige Verbindungsstege vorgesehen, so ist es zweckmäßig, dass jeder einzelne dieser Verbindungsstege zumindest längs eines Abschnitts von der Fügekomponente vollständig umschlossen ist, um eine möglichst feste Verbindung zu erhalten.

Vorzugsweise befinden sich in einem Verbundbauteil in einem Fügebereich mit einer Fügefläche solche Verbindungsstege auf jeder Seite der Fügefläche und mit Abstand zu dieser. In diesem Fall ist jeder Verbindungssteg jeweils einer Teilkomponente zugeordnet.

Es soll aber auch nicht ausgeschlossen sein, dass sich ein Verbindungssteg aus wenigstens zwei, verschiedenen Teilkomponenten zugeordneten Teilverbindungsstegen zusammensetzt, die sich in der Fügefläche berühren. In diesem Fall ist jeder Teilverbindungssteg unter Beitrag des Teilverbindungsstegs der anderen Teilkomponente bzw. der Teilverbindungsstege der anderen Teilkomponenten formschlüssig mit der Fügekomponente verbunden.

Besonders bevorzugt ist ein derartiger, wenigstens zwei Teilverbindungsstege umfassender Verbindungssteg von der Fügekomponente hintergriffen oder sogar vollständig von ihr umschlossen.

Weiterhin kann daran gedacht sein, die Festigkeit der Verbindung zwischen Teilkomponente und Fügekomponente weiter zu erhöhen, indem von dem Fügewandabschnitt oder der Begrenzungswand weg in den Raum hinein, der zwischen Fügewandabschnitt und Begrenzungswand gebildet wird, wenigstens eine Ankerstruktur absteht, welche von der Fügekomponente hintergriffen, vorzugsweise vollständig umschlossen ist.

Vorzugsweise weist die Fügekomponente eine um das Verbundbauteil umlaufende ringförmige Gestalt auf, da dies gegebenenfalls ein einfacheres Formwerkzeug gestattet. Dadurch kann die Anzahl vom Formwerkzeug bereitzustellender Begrenzungsflächen zur Begrenzung der Fügekavität, verglichen mit dem Stand der Technik, verringert werden, da der Fügewandabschnitt und die Begrenzungswand geschlossene Begrenzungsflächen der Fügekavität, etwa Mantelflächen der ringförmigen Fügekavität, bilden und vom Formwerkzeug lediglich die Stirnflächen der Fügekavität bereitgestellt werden müssen.

Schließlich kann daran gedacht sein, dass wenigstens eine erste Teilkomponente zumindest im ungefügten Zustand eine Lagesicherungsstruktur aufweist zum formschlüssigen Eingriff in eine Lagesicherungsgegenstruktur einer mit der ersten Teilkomponente zu fügenden zweiten Teilkomponente. Auf diese Weise wird sichergestellt, dass die beiden zu fügenden Teilkomponenten unmittelbar vor oder während des Fügeprozesses nicht relativ zueinander verlagert werden können. Eine komplementäre Ausbildung von Lagesicherungs- und Lagesicherungsgegenstruktur bietet dabei die größte Positionssicherheit.

Um die Festigkeit der Verbindung der Teilkomponenten und damit die Bruchfestigkeit des Verbundbauteils weiter zu erhöhen, kann vorgesehen sein, dass ein Abschnitt der Oberfläche der Lagesicherungsstruktur oder/und ein Abschnitt der Oberfläche der Lagesicherungsgegenstruktur oder/und ein Abschnitt der Oberfläche wenigstens einer der Teilkomponenten, welcher der Lagesicherungsstruktur bzw. der Lagesicherungsgegenstruktur unmittelbar benachbart ist, im Fügebereitschaftszustand des Verbundbauteils in Kontakt mit der Fügekomponente steht.

Eine wegen ihrer Festigkeit bevorzugte Verbindung kann dadurch erreicht werden, dass der die Fügekomponente kontaktierende Oberflächenabschnitt wenigstens einer Teilkomponente im gefügten Zustand mit der Fügekomponente wenigstens abschnittsweise, bevorzugt vollständig verschmolzen ist.

Bei einem Verbundbauteil, welches eine vorgegebene Seite aufweist, die frei von der Fügekomponente sein sollte, etwa die Innenseite eines Rohres aus einer Ober- und einer Unterschale mit einem auf der Rohr-Außenseite verlaufenden Fügerand, kann es zur Vermeidung eines Durchtritts von Material der Fügekomponente zu der vorgegebenen Seite hin zweckmäßig sein, dass der oben angesprochene Abschnitt sich auf der dieser vorgegebenen Seite abgewandten Seite der Lagesicherungsstruktur bzw. Lagesicherungsgegenstruktur befindet.

Gemäß einer bevorzugten Weiterbildung der vorliegenden Erfingung umfassen sowohl die Fügekomponente als auch wenigstens eine Teilkomponente jeweils einen thermisch erstarrbaren Werkstoff, wobei der thermisch erstarrbare Werkstoff der Fügekomponente eine höhere Schmelztemperatur aufweist als jener der wenigstens einen Teilkomponente.

Im Folgenden wird die vorliegende Erfindung im Wesentlichen anhand des besonders bevorzugten Ausführungsbeispiels eines im Spritzgießverfahren hergestellten Verbundbauteils erläutert, bei dem sowohl Fügekomponente als auch wenigstens eine Teilkomponente einen thermoplastischen Werkstoff, insbesondere thermoplastischen Kunststoff, umfassen. Es wird jedoch ausdrücklich darauf hingewiesen, dass sich die Erfindung stets auch auf Gießverfahren im Allgemeinen und in solchen Gießverfahren hergestellte Verbundbauteile bezieht, wobei Fügekomponente und wenigstens eine Teilkomponente ganz allgemein thermisch erstarrbare Werkstoffe, beispielsweise metallische oder glasartige Werkstoffe umfassen können. Das Adjektiv "thermoplastisch" ist also in den folgenden Ausführungen stets im Sinne von "thermisch erstarrbar, insbesondere thermoplastisch" zu verstehen.

Dabei ist zu beachten, dass sowohl die Fügekomponente als auch die oben angesprochene wenigstens eine Teilkomponente jeweils unterschiedliche thermoplastische Werkstoffe mit jeweils unterschiedlichen Schmelztemperaturen umfassen können. So kann eine Komponente beispielsweise einen ersten thermoplastischen Werkstoff umfassen, welcher mit Fasern oder/und Partikeln aus einem vom ersten verschiedenen zweiten thermoplastischen Werkstoff gefüllt ist. Zur erfindungsgemäßen Lösung der genannten Aufgabe ist in einem solchen Fall dann derjenige thermoplastische Werkstoff einer Komponente mit der niedrigsten Schmelztemperatur heranzuziehen. Auf diese Weise ist die Voraussetzung dafür geschaffen, dass dort, wo die Fügekomponente im fließfähigen Zustand die wenigstens eine Teilkomponente berührt, die Temperatur der Fügekomponente ausreicht, um zumindest Interdiffusionsprozesse zwischen Teilkomponente und Fügekomponente zu bewirken. Auf diese Weise kann eine besonders feste und dichte Verbindung zwischen Fügekomponente und Teilkomponente entstehen.

Da die zuletzt genannte Merkmalskombination in Kombination mit den Merkmalen des Oberbegriffs gemäß einem weiteren Gesichtspunkt ebenfalls die Aufgabe der vorliegenden Erfindung löst, wird für ein gattungsgemäßes Verbundbauteil, bei dem sowohl die Fügekomponente als auch wenigstens eine Teilkomponente jeweils einen thermisch erstarrbaren Werkstoff umfassen, wobei der thermisch erstarrbare Werkstoff der Fügekomponente eine höhere Schmelztemperatur aufweist als jener der wenigstens einen Teilkomponente. gesondert Patentschutz beantragt.

Gemäß einer vorteilhaften Weiterbildung der vorliegenden Erfindung umfassen wenigstens zwei, vorzugsweise alle Teilkomponenten, welche in einem Fügebereitschaftszustand einander zumindest abschnittsweise berühren, jeweils einen thermisch erstarrbaren, insbesondere thermoplastischen Werkstoff, dessen Schmelztemperatur niedriger ist als jene des thermisch erstarrbaren, insbesondere thermoplastischen Werkstoffs der Fügekomponente.

Zur Unterstützung von Diffusionsvorgängen ist es bevorzugt, wenn zu fügende Teilkomponenten und besonders bevorzugt auch die Fügekomponente kompatible Werkstoffe umfassen.

Unter dem Begriff des Fügebereitschaftszustands ist in diesem Zusammenhang ein Zustand zu verstehen, in den die zu fügenden Teilkomponenten gebracht werden, unmittelbar bevor sie durch Umgießen mit dem die Fügekomponente bildenden Werkstoff zusammengefügt werden. Vorzugsweise ist der Fügebereitschaftszustand ein der Endgestalt des Verbundbauteils naher Zustand. Berühren sich also zwei Teilkomponenten, die jeweils einen thermoplastischen Werkstoff umfassen, dessen Schmelztemperatur niedriger ist als jene des thermoplastischen Werkstoffs der Fügekomponente, so kann es nicht nur zwischen den Teilkomponenten und der Fügekomponente, sondern in den Bereichen, in denen sich die Teilkomponenten im Fügebereitschaftszustand berühren, auch direkt zwischen den Teilkomponenten zu Interdiffusionsprozessen kommen, die die Festigkeit und Dichtigkeit des zu bildenden Verbundbauteils erheblich erhöhen. Unter Interdiffusionsprozessen sind sowohl mikroskopische wie auch makroskopische Vermischungsprozesse zwischen den Teilkomponenten zu verstehen, wie sie insbesondere auch beim Schweißen auftreten. Dies gilt insbesondere, wenn Teilkomponenten nahe den Bereichen, in denen sie sich in einem Fügebereitschaftszustand berühren, beim Umgießen von dem schmelzflüssigen Werkstoff der Fügekomponente benetzt sind, insbesondere im Bereich einer Fügekavität.

Nach einer besonders bevorzugten Weiterbildung der vorliegenden Erfindung liegt in einem Fügebereitschaftszustand eine erste Teilkomponente mit einer Anlagefläche an einer Gegenanlagefläche einer zweiten Teilkomponente an. Im gefügten Zustand sind Anlagefläche und Gegenanlagefläche wenigstens abschnittsweise, vorzugsweise vollständig, miteinander verschmolzen. Durch die zumindest abschnittsweise Verschmelzung von Flächen zwischen den Teilkomponente kommt es zu einer besonders dichten Verbindung.

Die zuletzt genannte Merkmalskombination löst in Verbindung mit den Merkmalen des Oberbegriffs gemäß einem weiteren Gesichtspunkt ebenfalls die Aufgabe der vorliegenden Erfindung, weswegen für ein gattungsgemäßes Verbundbauteil, bei dem in einem Fügebereitschaftszustand eine erste Teilkomponente mit einer Anlagefläche an einer Gegenanlagefläche einer zweiten Teilkomponente anliegt und im gefügten Zustand Anlagefläche und Gegenanlagefläche wenigstens abschnittsweise, vorzugsweise vollständig, miteinander verschmolzen sind, gesondert Patentschutz beantragt wird. In diesem Fall ist es auch möglich, dass das fließfähige und erstarrbare Material der Fügekomponente aufgrund einer chemischen Reaktion erstarrbar ist, zum Beispiel bei der Verwendung von Gießharz als Material für die Fügekomponente. Dann muss die thermische Energie zum zumindest abschnittsweisen Verschmelzen von Anlage- und Gegenanlagefläche den Teilkomponenten auf andere Weise zugeführt werden, beispielsweise durch gesondertes Erhitzen der Flächen vor dem Zusammenfügen der Teilkomponenten.

Insbesondere die gerade beschriebene Gestaltung der Teilkomponenten mit Anlage- bzw. Gegenanlagefläche, die sich in einem Fügebereitschaftszustand berühren, lässt sich dahingehend erweitern, dass mehr als zwei Teilkomponenten in einer Struktur aus übereinandergestapelten Bereichen zusammengefügt werden können. Eine solche stapelförmige Struktur ist besonders für KFZ-Ansaugrohre aus Kunststoff interessant, die häufig aus einer Ober-, einer Unter- und mehreren Innenschalen bestehen. Daher umfasst das Verbundbauteil gemäß einer vorteilhaften Weiterbildung der vorliegenden Erfindung wenigstens drei Teilkomponenten.

Da dieses Merkmal in Kombination mit den Merkmalen des Oberbegriffs gemäß einem weiteren Gesichtspunkt ebenfalls die Aufgabe der vorliegenden Erfindung löst, wird für ein gattungsgemäßes Verbundbauteil, welches wenigstens drei Teilkomponenten umfasst, ebenfalls gesondert Patentschutz beantragt.

Besonders bevorzugt ist eine Weiterbildung der oben angesprochenen stapelförmigen Struktur, also eine Weiterbildung der vorliegenden Erfindung, bei der jede Teilkomponente einen Fügebereich aufweist, welche Fügebereiche in Fügerichtung aufeinander folgend angeordnet sind, wobei sich in Fügerichtung benachbarte Fügebereiche in einem Fügebereitschaftszustand des Verbundbauteils in einer Berührfläche berühren und im gefügten Zustand in der Berührfläche wenigstens abschnittsweise, vorzugsweise vollständig, miteinander verschmolzen sind.

Analog zu dem eingangs definierten Fügebereich des Verbundbauteils ist unter dem Fügebereich einer Teilkomponente ein die Fügeverbindung der Teilkomponente mit einer anderen Teilkomponente oder mit der Fügekomponente enthaltender Bereich der Teilkomponente zu verstehen.

Unter "Fügerichtung" ist in diesem Zusammenhang die Richtung zu verstehen, in der die zu fügenden Teilkomponenten zusammengefügt werden. Das Zusammenfügen von mehr als zwei Bauteilen kann dabei sowohl in einem einzigen Fügeverfahrensschritt als auch in mehreren aufeinander folgenden Fügeverfahrensschritten erfolgen, bei welchen jeweils eine oder mehrere Teilkomponenten mit den in den vorhergehenden Fügeverfahrensschritten bereits gefügten Teilkomponenten zusammengefügt werden. Dabei ist zu beachten, dass es bei einem Zusammenfügen in mehreren aufeinander folgenden Fügeverfahrensschritten zu mehreren, nacheinander auftretenden Fügebereitschaftszuständen kommt, wobei jedem Fügeverfahrensschritt ein Fügebereitschaftszustand zugeordnet ist.

Die oben genannte Aufgabe wird gemäß einem weiteren Gesichtspunkt der vorliegenden Erfindung ebenso gelöst durch ein gattungsgemäßes Verfahren zur Herstellung eines Verbundbauteils nach einem der vorhergehenden Ansprüche, wobei wenigstens eine der Teilkomponenten einen thermisch erstarrbaren, insbesondere thermoplastischen Werkstoff umfasst, wobei das fließfähige und erstarrbare Material zumindest beim Einfüllen in die Fügekavität eine Temperatur aufweist, welche höher ist als die Schmelztemperatur des thermisch erstarrbaren, insbesondere thermoplastischen Werkstoffs der wenigstens einen Teilkomponente.

Die oben zur Erläuterung des erfindungsgemäßen Verbundbauteils gemachten Ausführungen enthalten auch Verfahrensaspekte, so dass zur Erläuterung des erfindungsgemäßen Verfahrens zur Herstellung eines solchen Verbundbauteils ausdrücklich auf die obigen Erläuterungen zum Verbundbauteil selbst verwiesen wird.

In den obigen Erläuterungen wurde bereits auf die Bedeutung von Interdiffusionsprozessen zwischen den zu fügenden Teilkomponenten einerseits und der Fügekomponente andererseits bzw. zwischen den zu fügenden Komponenten hingewiesen. Daher ist gemäß einer vorteilhaften Erweiterung des erfindungsgemäßen Verfahrens vorgesehen, Fügeoberflächen der miteinander zu fügenden Teilkomponenten zumindest abschnittsweise in einem gesonderten Schritt zu erwärmen, um solche Prozesse zu begünstigen.

Da dieser Verfahrensschritt in Kombination mit den Verfahrensschritten des Oberbegriffs ebenfalls die Aufgabe der vorliegenden Erfindung löst, wird für ein gattungsgemäßes Verfahren, welches den Schritt eines zumindest abschnittsweisen Erwärmens von Fügeoberflächen der miteinander zu fügenden Teilkomponenten umfasst, gesondert Patentschutz beantragt.

Besonders bevorzugt umfasst das Erwärmen der Fügeoberflächen auch ein Anschmelzen der Fügeoberflächen, da auf diese Weise die Voraussetzung für eine großflächige und effektive Interdiffusion zwischen Fügekomponente und der zu fügenden Teilkomponente bzw. zwischen den zu fügenden Teilkomponenten untereinander geschaffen wird.

Vorzugsweise, insbesondere bei der Verarbeitung von thermoplastischem Kunststoff, erfolgt das Erwärmen der Fügeoberflächen durch Heißluft, besonders bevorzugt nach Einlegen der Teilkomponenten in ein Formwerkzeug, da die Teilkomponenten auf diese Weise unmittelbar nach dem Erwärmen gefügt werden können und so ein unerwünschtes Abkühlen der Teilkomponenten vor dem Fügen vermindert oder ganz vermieden werden kann.

Nachfolgend wird die vorliegende Erfindung anhand von vier besonders bevorzugten Ausführungsbeispielen in den beiliegenden Figuren 1 bis 8 näher erläutert.
- Fig. 1: zeigt eine Querschnittsdarstellung eines wesentlichen Ausschnittes eines erfindungsgemäßen Verbundbauteils gemäß einem ersten Ausführungsbeispiel der vorliegenden Erfindung längs der Schnittebene I-I in den Figuren 2 und 3.
- Fig. 2: zeigt den Gegenstand von Figur 1 in einer Längsschnittsdarstellung längs der Schnittebene II-II in den Figuren 1 und 3.
- Fig. 3: zeigt den Gegenstand von Figur 1 in einer Längsschnittansicht längs der Schnittebene III-III in den Figuren 1 und 2.
- Fig. 4: zeigt eine Querschnittsdarstellung eines wesentlichen Ausschnittes eines erfindungsgemäßen Verbundbauteils gemäß einem zweiten Ausführungsbeispiel der vorliegenden Erfindung längs der Schnittebene IV-IV in Figur 5.
- Fig. 5: zeigt den Gegenstand von Figur 4 in einer Längsschnittansicht längs der Schnittebene V-V in Figur 4.
- Fig. 6: zeigt eine Querschnittsdarstellung eines wesentlichen Ausschnittes eines erfindungsgemäßen Verbundbauteils gemäß einem dritten Ausführungsbeispiel der vorliegenden Erfindung längs der Schnittebene VI-VI in Figur 7.
- Fig. 7: zeigt den Gegenstand von Figur 6 in einer Längsschnittansicht längs der Schnittebene VII-VII in Figur 6.
- Fig. 8: zeigt eine Querschnittsdarstellung eines wesentlichen Ausschnittes eines erfindungsgemäßen Verbundbauteils gemäß einem vierten Ausführungsbeispiel der vorliegenden Erfindung längs einer Schnittebene, welche den Schnittebenen der Figuren 1, 4 und 6 entspricht.

Figuren, welche das gleiche Verbundbauteil in unterschiedlichen Ansichten darstellen, zeigen das jeweils dargestellte Verbundbauteil nicht im gleichen Maßstab und zeigen auch unterschiedlich große Ausschnitte des jeweils dargestellten Verbundbauteils.

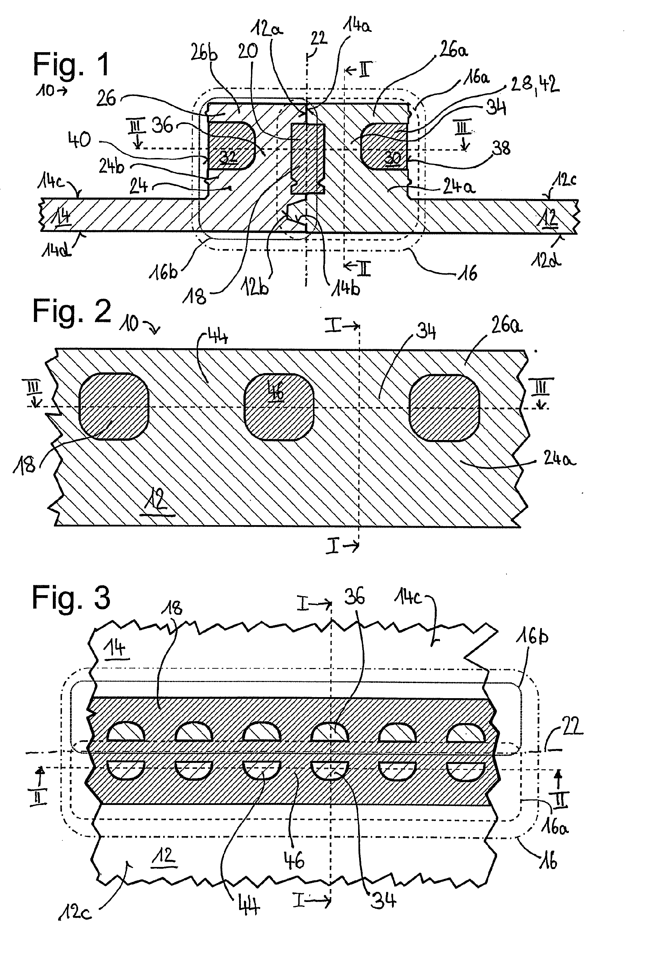

Figur 1 zeigt einen wesentlichen Ausschnitt eines erfindungsgemäßen Verbundbauteiles gemäß einem ersten Ausführungsbeispiel der vorliegenden Erfindung, welches Verbundbauteil allgemein mit 10 bezeichnet ist, und welches aus einer ersten Teilkomponente 12 und einer zweiten Teilkomponente 14 besteht, die in einem in Figur 1 durch eine strichpunktierte geschlossene Linie angedeuteten Fügebereich 16 durch eine Fügekomponente 18 verbunden sind. Dabei umfasst der Fügebereich 16 des Verbundbauteils sowohl den gestrichelt dargestellten Fügebereich 16a der ersten Teilkomponente 12 als auch den punktiert dargestellten Fügebereich 16b der zweiten Teilkomponente 14.

Zur besseren Unterscheidbarkeit sind die Teilkomponenten 12 und 14 mit verschiedenen Schraffuren gekennzeichnet, obwohl die Teilkomponenten im fertigen Verbundbauteil zumindest abschnittsweise stoffschlüssig miteinander verbunden sind, so dass sich der genaue Verlauf der ursprünglichen Grenzfläche zwischen den Teilkomponenten im fertigen Verbundbauteil gegebenenfalls nicht mehr genau erkennen lässt.

Die Teilkomponenten 12 und 14 sind an ihrem rechten bzw. linken Ende gebrochen gezeichnet, sind also an dem jeweiligen Ende in geeigneter Weise fortzusetzen. So ist zum Beispiel denkbar, dass die Teilkomponenten 12 und 14 die Ober- und Unterschale eines Rohres bilden, die im in Figur 1 dargestellten Bereich aneinander gefügt sind. Dabei bilden die Flächen 12c und 14c der Teilkomponenten 12 und 14 die Außenflächen des Rohres, die Flächen 12d und 14d die Innenflächen des Rohres.

In Figur 1 ist zu erkennen, dass die erste Teilkomponente 12 mit einer Anlagefläche 12a an einer Gegenanlagefläche 14a der zweiten Teilkomponente anliegt. In dem in den Figuren 1 bis 3 dargestellten besonders bevorzugten Ausführungsbeispiel umfassen sowohl die Fügekomponente 18 als auch die beiden Teilkomponenten 12 und 14 jeweils einen thermoplastischen Werkstoff, wobei die Schmelztemperaturen der thermoplastischen Werkstoffe der beiden Teilkomponenten jeweils kleiner sind als die Schmelztemperatur des thermoplastischen Werkstoffes der Fügekomponente 18. Daher kann es beim Fügen des Verbundbauteiles 10 nicht nur zu Interdiffusionsprozessen zwischen der Fügekomponente 18 und den einzelnen Teilkomponenten 12 bis 14, sondern im Bereich der Anlage- bzw. Gegenanlagefläche 12a bzw. 14a insbesondere in einem Bereich dieser Flächen, der nahe an dem daran angrenzenden von der Fügekomponente 18 ausgefüllten Teilbereich 20 liegt, auch zu Interdiffusionsprozessen direkt zwischen Teilkomponente 12 und Teilkomponente 14 kommen. Insbesondere könnten Interdiffusionsprozesse an der Anlage- bzw. Gegenanlagefläche 12a bzw. 14a dadurch begünstigt werden, dass man die Flächen 12a und 14a vor dem Zusammenfügen der Teilkomponenten 12 und 14 gesondert erwärmt, etwa durch Heißluft, besonders bevorzugt nach Einlegen der Teilkomponenten 12 und 14 in ein Formwerkzeug. Weiterhin ist es zur Begünstigung von Interdiffusionsprozessen zweckmäßig, wenn die Teilkomponenten 12 und 14, vorzugsweise auch die Fügekomponente 18, kompatible Werkstoffe umfassen.

Diese Interdiffusionsprozesse führen zu einer besonders festen und dichten Verbindung der Teilkomponenten 12 und 14, insbesondere dann, wenn sie ein Anschmelzen der Anlage- und Gegenanlageflächen 12a und 14a umfassen.

Die Form der Teilkomponenten 12 und 14 im Fügebereich 16 ist so gestaltet, dass sich die Menge der Fügestellen zu einer virtuellen Fügefläche 22 ergänzt denken lässt, deren Verlauf in Figur 1 durch eine strichpunktierte Linie angedeutet ist. In Figur 1 ist zu erkennen, dass das Verbundbauteil 10 einen von der Fügefläche 22 durchsetzten Fügewandabschnitt 24 und eine ebenfalls von der Fügefläche 22 durchsetzte Begrenzungswand 26 aufweist, wobei jeweils ein Abschnitt 24a bzw. 26a des Fügewandabschnitts 24 bzw. der Begrenzungswand 26 der ersten Teilkomponente 12 und ein anderer Abschnitt 24b bzw. 26b der zweiten Teilkomponente 14 zugeordnet ist. Fügewandabschnitt 24 und Begrenzungswand 26 sind mit Abstand voneinander angeordnet und verlaufen im dargestellten Ausführungsbeispiel parallel zueinander. Der Bereich 28 zwischen Fügewandabschnitt 24 und Begrenzungswand 26 ist von der Fügekomponente 18 zumindest teilweise ausgefüllt. In Figur 1 sind drei mit der Fügekomponente 18 ausgefüllte Teilbereiche 20, 30 und 32 des Bereiches 28 zu erkennen. Begrenzungswand 26 und Fügewandabschnitt 24 sind durch parallel zueinander verlaufende, den Bereich 28 durchsetzende und damit ebenfalls teilweise ausfüllende Verbindungsstege miteinander verbunden, von denen in Figur 2 zwei Verbindungsstege 34 und 36 erkennbar sind. Dabei ist der Verbindungssteg 34 der Teilkomponente 12 zugeordnet, der Verbindungssteg 36 der Teilkomponente 14.

Aus Figur 3 geht hervor, dass bei dem dargestellten Verbundbauteil 10 die Verbindungsstege, also auch die Verbindungsstege 34 und 36, vollständig, d.h. ringförmig von der Fügekomponente 18 umschlossen sind, was zu einer besonders hohen Festigkeit des resultierenden Verbundbauteiles führt. Im dargestellten Ausführungsbeispiel wird durch das ringförmige Umschließen der Verbindungsstege durch die Fügekomponente 18 eine Formschlussverbindung zwischen der Fügekomponente 18 und den einzelnen Teilkomponenten 12 und 14 erreicht, die eine Relativbewegung zwischen jeder einzelnen Teilkomponente 12 bzw. 14 und der Fügekomponente 18 hemmt.

Nachzutragen ist, dass sich in Figur 1 erkennen lässt, dass die Fügefläche 22 sowohl mit dem Fügewandabschnitt 24 als auch mit der Begrenzungswand 26 einen rechten Winkel einschließt.

Die Teilkomponente 12 weist weiterhin an ihrer der Teilkomponente 14 zugewandten Seite eine Lagesicherungsstruktur 12b auf, die Teilkomponente 14 an der entsprechenden Seite eine Lagesicherungsgegenstruktur 14b, die komplementär zur Lagesicherungsstruktur 12b ausgebildet ist. Lagesicherungsstruktur 12b und Lagesicherungsgegenstruktur 14b greifen so formschlüssig ineinander ein, dass ein Verlagern der Teilkomponenten 12 und 14 relativ zueinander, z.B. beim Fügeprozess, unterdrückt oder vollständig vermieden werden kann.

Beim Fügen der Teilkomponenten 12 und 14 durch Einfüllen von fließfähigem und erstarrbarem Material in den Bereich 28 zwischen Fügewandabschnitt 24 und Begrenzungswand 26 zur Bildung der Fügekomponente 18 muss dieser Bereich 28 unter Bildung einer Kavität 42 von allen Seiten durch Wände begrenzt sein. Die in Figur 1 dargestellte Geometrie des Verbundbauteiles 10 mit Fügewandabschnitt 24 und Begrenzungswand 26 bietet den Vorteil, dass Fügewandabschnitt 24 und Begrenzungswand 26 schon zwei der gegebenenfalls sechs notwendigen Wände der Fügekavität 42 bilden. In dem bevorzugten Fall, dass die Fügekomponente 18 eine um das Verbundbauteil 10 umlaufende ringförmige Gestalt aufweist, müssen nur die Oberflächen 38 und 40 des Verbundbauteils 10 durch das Formwerkzeug bestimmt werden, so dass vom Formwerkzeug nur zwei Begrenzungswände der Fügekavität 42 bereitgestellt werden müssen.

Figur 2 zeigt eine Längsschnittsdarstellung eines wesentlichen Ausschnitts des Verbundbauteiles 10 aus Figur 1 längs einer zu den Zeichenebenen der Figuren 1 und 3 jeweils orthogonalen Schnittebene II-II. Die Schnittebene II-II verläuft dabei parallel zur Fügefläche 22 und durch den Verbindungssteg 34 hindurch. In der Ansicht in Figur 2 ist also nur die Teilkomponente 12 sowie die Fügekomponente 18 zu erkennen, nicht jedoch die zweite Teilkomponente 14. Weiterhin sind die der ersten Teilkomponente 12 zugeordneten Abschnitte 24a und 26a des Fügewandabschnitts 24 bzw. der Begrenzungswand 26 zu erkennen. Figur 2 zeigt außerdem den schon in Figur 1 dargestellten Verbindungssteg 34 zwischen Fügewandabschnitt 24 und Begrenzungswand 26 sowie einen benachbarten Verbindungssteg 44. Zwischen den Verbindungsstegen 34 und 44 der ersten Teilkomponente 12 befindet sich ein Bereich 46, der ebenfalls mit der Fügekomponente 18 vollständig ausgefüllt ist.

Figur 3 zeigt eine Darstellung einer Längsschnittansicht eines wesentlichen Ausschnitts des Verbundbauteils 10 aus den Figuren 1 und 2 längs einer zu den Zeichenebenen der Figuren 1 und 2 jeweils orthogonalen Schnittebene III-III.

In der Ansicht von Figur 3 sind zwei Reihen von in regelmäßigen Abständen angeordneten Verbindungsstegen sowie die die Verbindungsstege umschließende Fügekomponente 18 sichtbar. In Figur 3 sind unter anderem die in den Figuren 1 und 2 dargestellten Verbindungsstege 34, 36 und 44 zu sehen. Auf eine Kennzeichnung der übrigen neun erkennbaren Verbindungsstege mit Bezugszeichen wurde der Übersichtlichkeit halber verzichtet.

In Figur 3 ist zu erkennen, dass in dem dargestellten Ausführungsbeispiel die Form der Teilkomponenten 12 und 14 insbesondere hinsichtlich der Form, Position und Verteilung der Verbindungsstege spiegelsymmetrisch bezüglich der Fügefläche 22 ist.

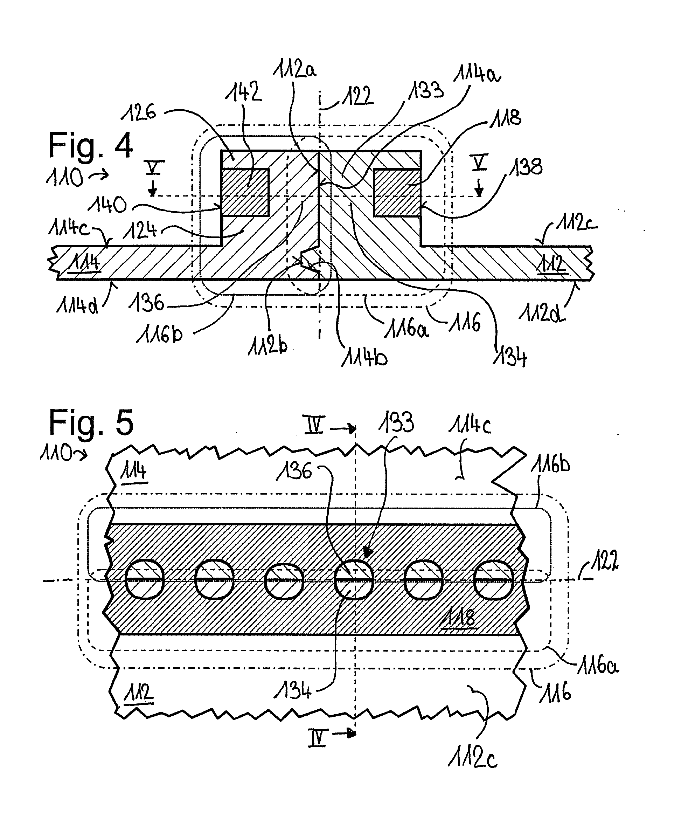

In den Figuren 4 bis 8, welche Verbundbauteile gemäß weiterer Ausführungsbeispiele der vorliegenden Erfindung darstellen, werden solche Bauteile, welche Bauteilen des ersten Ausführungsbeispiels entsprechen, durch Bezugszeichen gekennzeichnet, die durch Addition der Zahlen 100, 200 bzw. 300 für das zweite, dritte, bzw. vierte Ausführungsbeispiel aus den Bezugszeichen der entsprechenden Bauteile des ersten Ausführungsbeispiels hervorgehen.

Die folgenden Ausführungsbeispiele werden nur insofern genauer beschrieben, als sie sich von dem ersten Ausführungsbeispiel unterscheiden, auf dessen vorstehende Beschreibung ansonsten ausdrücklich verwiesen wird.

Figur 4 zeigt einen wesentlichen Ausschnitt eines erfindungsgemäßen Verbundbauteiles 110 gemäß einem zweiten Ausführungsbeispiel der vorliegenden Erfindung in einer Querschnittsansicht, welche der Ansicht von Figur 1 entspricht.

Auch das Verbundbauteil 110 umfasst zwei Teilkomponenten 112 und 114, die durch eine Fügekomponente 118 formschlüssig miteinander verbunden sind. Dabei kann gewünschtenfalls hier, wie auch in den folgenden Ausführungsbeispielen die Schmelztemperatur der Fügekomponente höher sein, als die Schmelztemperatur einer oder mehrerer Teilkomponenten, so dass es auch hier zu die Verbindung festigenden Interdiffusionsprozessen der Teilkomponenten untereinander bzw. mit der Fügekomponente kommen kann.

Das Verbundbauteil 110 umfasst weiterhin, ähnlich wie das Verbundbauteil 10 der Figuren 1 bis 3, einen von der Fügefläche 122 durchsetzten Fügewandabschnitt 124 sowie eine ebenfalls von der Fügefläche 122 durchsetzte Begrenzungswand 126, die mit dem Fügewandabschnitt über Verbindungsstege 136 und 134 verbunden ist, wobei in dem Bereich 128 zwischen Fügewandabschnitt 124 und Begrenzungswand 126 zumindest ein Teil der Fügekomponente 118 aufgenommen ist.

Die Verbindungsstege 136, 134 zwischen Begrenzungswand 126 und Fügewandabschnitt 124 unterscheiden sich darin von den Verbindungsstegen 34, 36 des ersten Ausführungsbeispiels der Figuren 1-3, dass sie nicht mit Abstand von Fügefläche 122 angeordnet sind sondern derart, dass sich je ein Verbindungssteg (z.B. 134) der Teilkomponente 112 und ein Verbindungssteg (z.B. 136) der Teilkomponente 114 in der Fügefläche 122 berühren und der Verbindungssteg (z.B. 134) der einen Teilkomponente 112 unter Beitrag des Verbindungsstegs (z.B. 136) der anderen Teilkomponente 114 formschlüssig mit der Fügekomponente 118 verbunden ist.

Die Verbindungsstege 134 und 136 können hier also als Teilverbindungsstege 134 und 136 aufgefasst werden, aus denen ein Verbindungssteg 133 des Verbundbauteils 110 zusammengesetzt ist, wobei der die Teilverbindungstege 134, 136 umfassende Verbindungssteg 133 vollständig von der Fügekomponte 118 umschlossen sein kann, wie vor allem in der in Figur 5 dargestellten Längsschnittansicht des Verbundbauteils 110 entlang der Linie V-V in Figur 4 zu erkennen ist.

Wie Figur 5 zeigt, können auch in diesem Fall mehrere gleichartige Verbindungsstege (z. B. 133) des Verbundbauteils 110 äquidistant entlang der Fügefläche 122 in einer Reihe angeordnet sein, die sich jeweils aus zwei einander in der Fügefläche 122 berührenden Teilverbindungsstegen (z. B. 134 und 136) zusammensetzen. In Figur 5 sind sechs solcher Verbindungsstege zu sehen, wobei aus Gründen der Übersichtlichkeit nur der in Figur 4 dargestellte Verbindungssteg 133 sowie die zugehörigen Teilverbindungsstege 134 und 136 mit Bezugszeichen versehen sind.

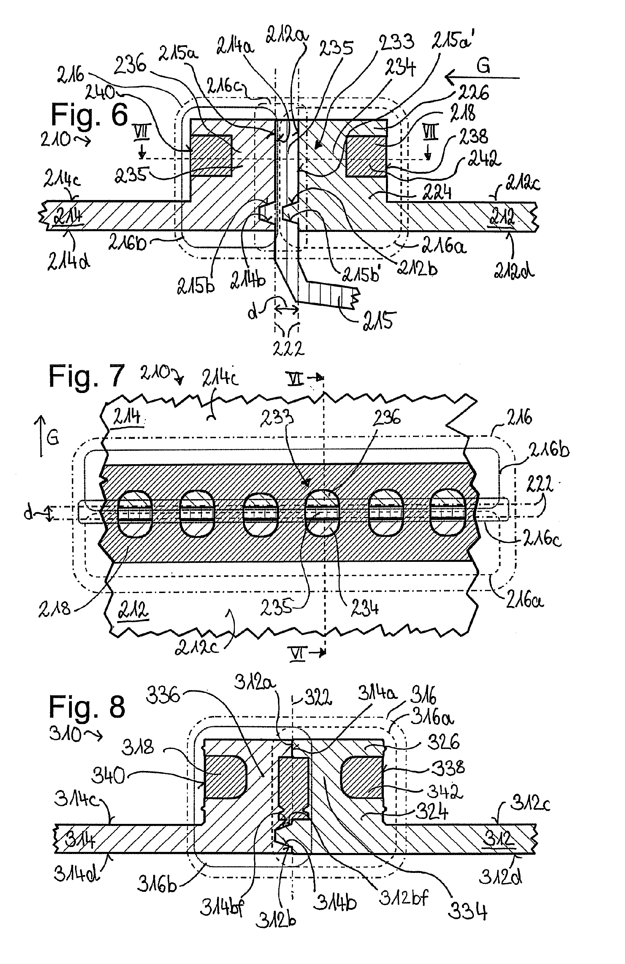

Bei dem in den Figuren 6 und 7 dargestellten dritten Ausführungsbeispiel der vorliegenden Erfindung sind im Unterschied zu den übrigen Ausführungsbeispielen drei Teilkomponenten 212, 214 und 215 formschlüssig mit einer Fügekomponente 218 zu dem dargestellten Verbundbauteil 210 verbunden.

Jede der Teilkomponenten 212, 214 und 215 weist einen ihr zugeordneten Fügebereich 216a, 216b, 216c auf, wobei diese Fügebereiche 216a, 216b, 216c von dem Fügebereich 216 des Verbundbauteils 210 umfasst werden, und in Fügerichtung G aufeinander folgend angeordnet sind, wobei sich in Fügerichtung G benachbarte Fügebereiche, also 216a und 216c oder 216b und 216c in einem Fügebereitschaftszustand, also unmittelbar vor dem Fügen, in einer Berührfläche berühren und im gefügten Zustand in der Berührfläche wenigstens abschnittsweise miteinander verschmolzen sein können.

Beispielsweise kann es sich bei den Bauteilen 212 und 214 um Ober- und Unterschale eines Rohres handeln und bei der Teilkomponente 215 um ein im Inneren des Rohres vorgesehenes Bauteil.

Die Teilkomponenten 212, 214 und 215 können auch hier Lagesicherungsstrukturen 212b, 215b sowie Lagesicherungsgegenstrukturen 214b, 215b' zur Fixierung der einzelnen Teilkomponenten 212, 214, 215 untereinander beim Fügevorgang aufweisen.

Hinsichtlich der Form von Fügewandabschnitt 224 und Begrenzungswand 226 ähnelt das Verbundbauteil 210 dem Verbundbauteil 110 darin, dass die einzelnen Verbindungsstege 234, 235 und 236 nicht mit Abstand von der Fügefläche 222 angeordnet sind, die sich im vorliegenden Fall aus zwei Fügeflächen 222 zusammengesetzt oder als Fügefläche mit einer endlichen Ausdehnung d aufgefasst werden kann, sondern dass sich die Verbindungsstege 234, 235, 236 der ersten 212 und der dritten 215 Teilkomponente sowie der dritten 215 und der zweiten 214 Teilkomponente jeweils in der Fügefläche 222 berühren und jeder Verbindungssteg 234, 235, 236 einer Teilkomponente 212, 214, 215 unter Beitrag von Verbindungsstegen 234, 235, 236 der jeweiligen beiden anderen Teilkomponenten 212, 214, 215 mit der Fügekomponente 218 formschlüssig verbunden ist.

Auch hier können die Verbindungsstege 234, 235, 236 der Teilkomponenten 212, 215, 214 als Teilverbindungsstege 234, 235, 236 aufgefasst werden, aus denen ein Verbindungssteg 233 der Verbindung zwischen Fügewandabschnitt 224 und Begrenzungswand 226 zusammengesetzt ist. Wie insbesondere die Längsschnittansicht in Figur 7 zeigt, kann ein solcher zusammengesetzter Verbindungssteg 233 vollständig, hier ringförmig, von der Fügekomponente 218 umschlossen sein.

Figur 8 zeigt schließlich ein Verbundbauteil 310 gemäß einem vierten Ausführungsbeispiel der vorliegenden Erfindung in einer den Ansichten der Figuren 1, 4 und 6 entsprechenden Querschnittsansicht.

Die Teilkomponenten 312, 314 dieses Verbundbauteils 310 weisen eine Lagesicherungsstruktur 312b bzw. eine Lagesicherungsgegenstruktur 314b auf, die jeweils einen Abschnitt 312bf bzw. 314bf aufweisen, wobei diese Abschnitte 312bf bzw. 314bf der Lagesicherungsstruktur 312b bzw. der Lagesicherungsgegenstruktur 314b in einem Fügebereitschaftszustand jeweils in Kontakt mit der Fügekomponente 318 stehen und vorzugsweise im gefügten Zustand mit dieser zumindest abschnittsweise verschmolzen sein können, was die Bruchfestigkeit des resultierenden Verbundbauteils 310 deutlich erhöht.

Dabei befinden sich die Abschnitte 312bf und 314bf auf derjenigen Seite der Lagesicherungsstruktur 312b bzw. der Lagesicherungsgegenstruktur 314b, die den Flächen 312d, 314d des Verbundbauteils abgewandt ist, die zum Beispiel die Innenflächen eines Rohres bilden, wodurch verhindert wird, dass beim Fügevorgang Material der Fügekomponente in das Innere des Rohres eintritt.

Eine derartig modifizierte Form der Lagesicherungsstrukturen 312b und Lagesicherungsgegenstrukturen 314b ist natürlich auch bei jedem anderen der dargestellten Verbundbauteile möglich.

## Patentansprüche

1. Verbundbauteil (10; 110; 210; 310) aus wenigstens zwei Teilkomponenten (12, 14; 112, 114; 212, 214, 215; 312, 314), insbesondere umfassend eine Oberschale und eine Unterschale, welche durch eine Fügekomponente (18; 118; 218; 318) aus einem fließfähigen und erstarrbaren Material derart formschlüssig miteinander verbunden sind, dass jede einzelne zu fügende Teilkomponente (12, 14; 112, 114; 212, 214, 215; 312, 314) in einer eine Relativbewegung zwischen ihr und der Fügekomponente (18; 118; 218; 318) hemmenden Formschlussverbindung mit der Fügekomponente (18; 118; 218; 318) steht,
**dadurch gekennzeichnet, dass** die Teilkomponenten (12, 14; 112, 114; 212, 214, 215; 312, 314) zwischen sich eine die Fügestelle der Teilkomponenten (12, 14; 112, 114; 212, 214, 215; 312, 314) enthaltende Fügefläche (22; 122; 222; 322) definieren, wobei das Verbundbauteil (10; 110; 210; 310) einen von der Fügefläche (22; 122; 222; 322) durchsetzten Fügewandabschnitt (24; 124; 224; 324) und eine von der Fügefläche (22; 122; 222; 322) durchsetzte, mit Abstand von dem Fügewandabschnitt (24; 124; 224; 324) vorgesehene und mit diesem verbundene Begrenzungswand (26; 126; 226; 326) aufweist, wobei sowohl der Fügewandabschnitt (24; 124; 224; 324) als auch die Begrenzungswand (26; 126; 226; 326) einen Winkel, vorzugsweise rechten Winkel, mit der Fügefläche (22; 122; 222; 322) einschließen, und wobei zumindest ein Abschnitt der Fügekomponente (18; 118; 218; 318) zwischen dem Fügewandabschnitt (24; 124; 224; 324) und der Begrenzungswand (26; 126; 226; 326) aufgenommen ist.

2. Verbundbauteil (10; 110; 210; 310) nach Anspruch 1,
**dadurch gekennzeichnet, dass** die Fügekomponente (18; 118; 218; 318) den Bereich (28; 128; 228; 328) zwischen Fügewandabschnitt (24; 124; 224; 324) und Begrenzungswand (26; 126; 226; 326) vollständig ausfüllt.

3. Verbundbauteil (10; 110; 210; 310) nach Anspruch 1 oder 2, **dadurch gekennzeichnet, dass** die Verbindung der Begrenzungswand (26; 126; 226; 326) mit dem Fügewandabschnitt (24; 124; 224; 324) wenigstens einen Verbindungssteg (34, 36, 44; 133; 233; 334; 336) aufweist, welcher zumindest längs eines Abschnitts von der Fügekomponente (18; 118; 218; 318) hintergriffen, vorzugsweise vollständig umschlossen ist.

4. Verbundbauteil (10; 110; 210; 310) nach Anspruch 3,
**dadurch gekennzeichnet, dass** die Verbindung der Begrenzungswand (26; 126; 226; 326) mit dem Fügewandabschnitt (24; 124; 224; 324) eine Mehrzahl von Verbindungsstegen (34, 36, 44; 133; 233; 334; 336) aufweist, von denen jeder einzelne zumindest längs eines Abschnitts von der Fügekomponente (18; 118; 218; 318) vollständig umschlossen ist.

5. Verbundbauteil (10; 310) nach Anspruch 3 oder 4,
**dadurch gekennzeichnet, dass** jede Teilkomponente (12,14; 312, 314) wenigstens einen mit Abstand von der Fügefläche (22; 322) vorgesehenen Verbindungssteg (34, 36, 44; 334, 336) aufweist, welcher von der Fügekomponente (18; 318) hintergriffen, vorzugsweise vollständig umschlossen ist.

6. Verbundbauteil (110; 210) nach Anspruch 3 oder 4,
**dadurch gekennzeichnet, dass** wenigstens ein Verbindungssteg (133, 233) sich aus wenigstens zwei, verschiedenen Teilkomponenten (112, 114; 312, 314, 315) zugeordneten Teilverbindungsstegen (134, 136; 234, 235, 236) zusammensetzt, die sich in der Fügefläche (122; 222) berühren, wobei jeder Teilverbindungssteg (134, 136; 234, 235, 236) einer Teilkomponente (112, 114; 312, 314, 315) unter Beitrag des Teilverbindungsstegs (134, 136) der anderen Teilkomponente (112, 114) oder der Teilverbindungsstege (234, 235, 236) der anderen Teilkomponenten (234, 235, 236) formschlüssig mit der Fügekomponente (118; 218) verbunden ist, wobei vorzugsweise der wenigstens zwei Teilverbindungsstege (134, 136; 234, 235, 236) umfassende Verbindungssteg (133, 233) von der Fügekomponente (118; 218) zumindest abschnittsweise hintergriffen oder vollständig umschlossen ist.

7. Verbundbauteil (10) nach einem der vorherigen Ansprüche,
**dadurch gekennzeichnet, dass** von dem Fügewandabschnitt (24) oder/und der Begrenzungswand (26) weg in den zwischen dem Fügewandabschnitt (24) und der Begrenzungswand (26) gebildeten Raum (28) hinein wenigstens eine Ankerstruktur absteht, welche von der Fügekomponente (18) hintergriffen, vorzugsweise vollständig umschlossen ist.

8. Verbundbauteil (10; 110; 210; 310) nach einem der vorhergehenden Ansprüche,
**dadurch gekennzeichnet, dass** die Fügekomponente (18; 118; 218; 318) eine um das Verbundbauteil (10; 110; 210; 310) umlaufende ringförmige Gestalt aufweist.

9. Verbundbauteil (10; 110; 210; 310) nach einem der vorhergehenden Ansprüche,
**dadurch gekennzeichnet, dass** wenigstens eine erste Teilkomponente (12; 112; 212, 215; 312) zumindest im ungefügten Zustand eine Lagesicherungsstruktur (12b; 112b; 212b, 215b, 312b) aufweist zum Formschlusseingriff in eine Lagesicherungsgegenstruktur (14b; 114b; 214b, 215b'; 314b) einer mit der ersten Teilkomponente (12; 112; 212, 215; 312) zu fügenden zweiten Teilkomponente (14,114; 214, 215; 314), wobei die Lagesicherungsgegenstruktur (14b; 114b; 214b 215b'; 314b) vorzugsweise im Wesentlichen komplementär zur Lagesicherungsstruktur (12b; 112b; 212b, 215b, 312b) ausgebildet ist.

10. Verbundbauteil (310) nach Anspruch 9,
**dadurch gekennzeichnet, dass** ein Abschnitt (312bf) der Oberfläche der Lagesicherungsstruktur (312b) oder/und ein Abschnitt (314bf) der Oberfläche der Lagesicherungsgegenstruktur (314b) oder ein Abschnitt der Oberfläche wenigstens einer der Teilkomponenten (312, 314), welcher der Lagesicherungsstruktur (312b) oder/und der Lagesicherungsgegenstruktur (314b) unmittelbar benachbart ist, im Fügebereitschaftszustand des Verbundbauteils (310) in Kontakt mit der Fügekomponente (318) steht und im gefügten Zustand vorzugsweise mit der Fügekomponente (318) wenigstens abschnittsweise, besonders bevorzugt vollständig verschmolzen ist.

11. Verbundbauteil (10; 110; 210, 310) nach dem Oberbegriff von Anspruch 1 oder einem der vorhergehenden Ansprüche,
**dadurch gekennzeichnet, dass** sowohl die Fügekomponente (18; 118; 218; 318) als auch wenigstens eine Teilkomponente (12, 14; 112, 114; 212, 214, 215; 312, 314) jeweils einen thermisch erstarrbaren, vorzugsweise thermoplastischen Werkstoff umfassen, wobei der thermisch erstarrbare Werkstoff der Fügekomponente (18; 118; 218; 318) eine höhere Schmelztemperatur aufweist als jener der wenigstens einen Teilkomponente (12, 14; 112, 114; 212, 214, 215; 312, 314).

12. Verbundbauteil (10; 110; 210, 310) nach Anspruch 11,
**dadurch gekennzeichnet, dass** wenigstens zwei, vorzugsweise alle, Teilkomponenten (12, 14; 112, 114; 212, 214, 215; 312, 314), welche in einem Fügebereitschaftszustand einander zumindest abschnittsweise berühren, jeweils einen thermisch erstarrbaren, vorzugsweise thermoplastischen Werkstoff umfassen, dessen Schmelztemperatur niedriger ist als jene des thermoplastischen Werkstoffs der Fügekomponente (18; 118; 218; 318).

13. Verbundbauteil (10; 110; 210; 310) nach dem Oberbegriff von Anspruch 1 oder nach einem der vorhergehenden Ansprüche,
**dadurch gekennzeichnet, dass** in einem Fügebereitschaftszustand eine erste Teilkomponente (12; 112; 212, 215; 312) mit einer Anlagefläche (12a; 112a; 212a, 215a; 312a) an einer Gegenanlagefläche (14a; 114a; 214a, 215a'; 314a) einer zweiten Teilkomponente (14; 114; 214, 215; 314) anliegt und im gefügten Zustand Anlagefläche (12a; 112a; 212a, 215a; 312a) und Gegenanlagefläche (14a; 114a; 214a, 215a'; 314a) wenigstens abschnittsweise, vorzugsweise vollständig, miteinander verschmolzen sind.

14. Verbundbauteil (210) nach dem Oberbegriff von Anspruch 1 oder nach einem der vorhergehenden Ansprüche,
**dadurch gekennzeichnet, dass** es wenigstens drei Teilkomponenten (212, 214, 215) umfasst.

15. Verbundbauteil (210) nach Anspruch 14,
**dadurch gekennzeichnet, dass** jede Teilkomponente (212, 214, 215) einen Fügebereich (216a, 216b, 216c) aufweist, welche Fügebereiche (216a, 216b, 216c) in Fügerichtung (G) aufeinander folgend angeordnet sind, wobei sich in Fügerichtung (G) benachbarte Fügebereiche (216a, 216b, 216c) in einem Fügebereitschaftszustand des Verbundteils (210) in einer Berührfläche berühren und im gefügten Zustand in der Berührfläche wenigstens abschnittsweise, vorzugsweise vollständig, miteinander verschmolzen sind.
